# FASCICULE DE BREVET EUROPEEN

(11) **EP 2 408 871 B1**
(45) Date de publication et mention de la délivrance du brevet: **21.12.2016**
(21) Numéro de dépôt: 10707036.9
(22) Date de dépôt: 05.03.2010
(51) Int. Cl.: C09J 5/02, C09J 5/06

(54) **PROCEDE DE COLLAGE DEMONTABLE ADAPTE AUX MATERIAUX POREUX**
VERFAHREN ZUR LÖSBAREN VERKLEBUNG FÜR PORÖSE MATERIALIEN
METHOD FOR DETACHABLE GLUING FOR POROUS MATERIALS

(30) Priorité: 17.03.2009 FR 0951692
(43) Date de publication de la demande: 25.01.2012
(73) Titulaire: Airbus Safran Launchers SAS, 92130 Issy-les-Moulineaux (FR)
(72) Inventeur: ALCORTA, José, F-33130 Begles (FR); OLIVE, Maxime, F-33400 Talence (FR); LARNAC, Guy, F-33160 Saint Aubin De Medoc (FR); CHATAIGNIER, Evelyne, F-33160 Saint Medard En Jalles (FR)
(74) Mandataire: Ipside
(86) Numéro de dépôt international: PCT/EP2010/052839
(87) Numéro de publication internationale: WO 2010/105924

(56) Documents cités:
- WO-A-00/40648
- WO-A-2004/087829
- US-A1- 2005 039 848

## Description

La présente invention concerne un procédé de collage démontable adapté aux matériaux poreux.

Elle s'applique particulièrement dans le domaine du collage structural et plus particulièrement celui du collage à décollement sur commande en sorte notamment de permettre le désassemblage ou le démantèlement des structures au cours de leur vie ou fin de vie.

Les secteurs techniques concernés sont notamment les secteurs consommateurs de matériaux composites comme l'aérospatial, l'aéronautique, l'automobile, l'éolien ou autres secteurs pour les quels des structures de grande taille sont réalisées en matériaux composites.

Dans le cas des lanceurs spatiaux, le procédé de l'invention est notamment utile pour la conception de lanceurs à étages séparables.

Des procédés de collage permettant un décollement commandé sont connus notamment des documents FR 2 837 114 A1, WO2004/087829 A2 et WO2006/048585 A1.

Un procédé particulier est connu en outre des publications IN72-AM, N, BT et JC des Techniques de l'Ingénieur.

La technique décrite dans les documents FR 2 837 114 A1 et WO2004/087829 A2 consiste à incorporer dans un adhésif ou dans un primaire d'adhésion un adjuvant adapté à générer des gaz dont on peut provoquer une expansion par chauffage.

Dans le document WO2006/048585 A1, l'adjuvant est un produit qui va, sous l'action d'un chauffage, migrer à l'interface pour générer une couche de faible cohésion, notamment par migration de gaz et création de contraintes interfaciales.

Un problème est que le procédé de démontage commandé grâce à un chauffage conduisant à une migration d'un adjuvant vers l'interface substrat/adhésif accompagnée d'une expansion gazeuse à cet interface, fonctionne avec une efficacité variable en fonction des substrats collés.

Plus particulièrement, la démontabilité est perfectible quand ces substrats sont poreux, qu'il s'agisse de bois, de matériaux composites ou de matériaux obtenus par frittage.

On a constaté que, comme dans tout collage structural, les films de colle et/ou les primaires utilisés étant en épaisseur très mince, lors du dégazage commandé, les gaz diffusent très facilement à travers ces films, puis vers l'extérieur, notamment au travers des substrats poreux.

De ce fait, la création d'une poche de gaz permettant la dégradation de la liaison collée ne peut se faire à l'interface adhésif/substrat ce qui rend le procédé inefficace.

Augmenter l'épaisseur des films de colle et/ou la quantité d'additif et donc de gaz générés n'est pas satisfaisant car incompatible avec un collage structural.

Pour résoudre ce problème, la présente invention propose une solution permettant de conserver au collage une tenue en utilisation proche de celle que l'on a lors d'un collage structural des mêmes substrats sans moyens de décollement commandés, tout en permettant après commande de décollement une tenue résiduelle faible du collage.

Pour ce faire la présente invention propose un procédé de collage démontable d'au moins un substrat poreux avec un autre matériau au moyen d'au moins une couche d'adhésif démontable comportant un adjuvant de décollement adapté à générer des gaz qui, par expansion gazeuse ou par migration gazeuse vers au moins une des interfaces de la couche d'adhésif démontable sous l'action d'un chauffage de commande de démontage fragilisent une liaison adhésive, pour lequel on procède, préalablement au collage, à une application d'un revêtement métallique d'étanchéité sur ledit au moins un substrat.

Avantageusement, ladite couche d'adhésif démontable comporte une couche d'un primaire démontable et une couche d'adhésif.

Selon un premier mode de réalisation on réalise le revêtement métallique au moyen d'un feuillard collé sur ledit au moins un substrat au moyen d'un adhésif de couplage composite/métal.

Alternativement, on réalise le revêtement métallique au moyen d'un feuillard collé sur ledit au moins un substrat par cofusion.

Le feuillard est notamment un feuillard d'aluminium.

Avantageusement, le feuillard est revêtu de la couche d'adhésif démontable préalablement à son application sur ledit au moins un substrat.

Selon un second mode de réalisation, on réalise le revêtement métallique par dépôt métallique.

Selon une première variante, on réalise le dépôt métallique par galvanoplastie.

Dans ce cadre, on dépose préférablement une couche de cuivre sur ledit substrat.

On termine avantageusement le revêtement métallique par le dépôt d'une couche de nickel sur la couche de cuivre.

Selon une seconde variante, on réalise le dépôt métallique par une technique de dépôt physique par phase vapeur d'un métal.

Le métal est préférablement choisi parmi l'aluminium, le titane et un alliage nickel chrome.

On réalise avantageusement le revêtement métallique par le dépôt d'une couche de métal de 1 à 10 microns.

Selon un mode de réalisation préférentiel, on réalise le revêtement métallique par le dépôt d'une couche de titane de 1 à 3 microns.

Selon une troisième variante on réalise le dépôt métallique par métallisation par projection de flamme.

Le métal est dans ce cas préférablement choisi parmi l'aluminium, le titane et un alliage nickel chrome.

Selon un mode de réalisation avantageux de l'invention, dans le cas d'un dépôt, on effectue préalablement au dépôt une opération de décapage du substrat.

On réalise avantageusement l'opération de décapage avec des atomes d'argon et préférablement avec un mélange d'atomes d'argon et d'oxygène.

Selon un mode de réalisation préférentiel, on effectue un polissage de la surface du revêtement métallique après dépôt et avant application de l'adhésif démontable et collage en sorte de réduire la rugosité Ra du revêtement.

Toujours dans le cadre de l'invention on adapte avantageusement au moins l'une des épaisseur du revêtement métallique et rugosité du revêtement métallique en sorte d'obtenir une tenue à la rupture entre 10 et 20 MPa avant commande de démontage et une tenue à la rupture inférieure à 1 MPa après commande de démontage.

La présente invention concerne en outre un assemblage démontable d'au moins un substrat poreux avec un autre matériau réalisé au moyen d'un procédé de collage démontable pour lequel la tenue de l'assemblage avant commande de décollement est supérieure à 15MPa avec rupture cohésive entre le substrat et le revêtement et la tenue résiduelle après commande du décollement est inférieure à 0,8MPa.

Dans le cas du procédé de l'invention utilisant un feuillard, l'assemblage comporte préférablement en suivant: un premier substrat composite, un adhésif de couplage composite/métal, un revêtement métallique, une couche de primaire démontable, une couche d'adhésif et un second substrat.

L'assemblage selon le procédé de l'invention est avantageusement tel que le revêtement métallique réalise une zone conductrice de l'électricité sous le primaire démontable et constitue une piste conductrice résistive adaptées à commander la démontabilité de la liaison par le passage d'un courant électrique dans le revêtement métallique pour chauffer par effet Joule la zone de liaison.

D'autres caractéristiques et avantages de l'invention seront apparents à la lecture de la description qui suit d'exemples de réalisation non limitatifs.

La présente invention s'applique tout particulièrement aux assemblages structuraux, c'est-à-dire aux assemblages réalisés avec des liaison à haute tenue mécanique destinées à fonctionner pendant des durées qui peuvent être importantes.

Des exemples de telles liaisons sont la fixation des pare-brises sur les carrosseries des automobiles, les liaisons entre étages de lanceur ou sondes spatiaux ou les assemblages de structures composites, panneaux de fuselages ou d'ailes d'aéronefs, pales d'éoliennes.

Elle s'applique lorsque la séparation des éléments des assemblages doit être contrôlée, c'est à dire déclenchée de manière contrôlée, et doit conduire à un effort de cisaillement minimal.

Dans ce cadre, la présente invention propose un procédé de collage démontable d'au moins un substrat poreux avec un autre matériau, cet autre matériau pouvant être lui même un substrat poreux ou non.

Le document WO2004/087829 A2 décrit en particulier les méthodes de mesures employée, ainsi que l'ordre de grandeur des tenues mécaniques attendues. Ces tenues dépendent en fait du système que l'on assemble, mais pour l'aspect démontabilité, la tenue résiduelle ne doit pas dépasser 1 MPa.

La présente invention propose ainsi un perfectionnement du procédé tel que décrit dans les documents cités plus haut afin que ce procédé conserve son efficacité pour une utilisation avec des substrats poreux.

Ce perfectionnement doit permettre de conserver au collage une tenue en utilisation proche de celle que l'on a lors d'un collage structural des mêmes substrats, tout en permettant après commande une tenue résiduelle faible.

La solution proposée par la présente invention et testée notamment sur des composites carbone-époxy, est de revêtir au moins une des surfaces à coller par une métallisation, en adaptant le procédé de mise en place de cette métallisation de telle façon que cette métallisation ait une adhérence suffisante sur le substrat, c'est à dire une adhérence au moins équivalente à la tenue de la liaison collée.

L'invention fonctionne dans le cas où l'on colle deux substrats poreux ensemble et, dans la mesure où l'adjuvant est incorporé dans un primaire, il suffit de revêtir un des substrats poreux tel qu'un composite par le revêtement métallique du côté ou se trouve le primaire avec adjuvant, l'adhésif du côté du second substrat poreux formant lui même un film bouche pores.

Dans le cas où l'adjuvant est incorporé à l'adhésif il peut être préférable de revêtir les deux substrats poreux d'une métallisation pour améliorer le fonctionnement du procédé et pouvoir démonter la liaison des deux côtés.

Les caractéristiques attendues des liaisons collées, et leur méthode de mesure sont notamment caractérisées par un essai de « traction-cisaillement » selon la norme ISO 4587.

Pour un assemblage collé structural, on peut attendre dans ce type d'essai une tenue comprise entre 10 et 20 MPa, en fonction des adhésifs et des substrats.

Dans ce type d'essais, le faciès de rupture est un point important : on préfère en général que la rupture se fasse dans un des matériaux, il s'agit dans ce cas d'une rupture cohésive dans l'adhésif ou les substrats, plutôt qu'une rupture adhésive à un interface.

En effet, on considère qu'une rupture cohésive indique que la tenue de la liaison est limitée par la performance intrinsèque des matériaux mise en oeuvre, alors qu'une rupture adhésive est significative d'un procédé de collage imparfait.

Comme expliqué précédemment, pour la démontabilité, on souhaite que la tenue résiduelle de l'assemblage soit la plus faible possible et en tout cas inférieure à 1 MPa. On préférera dans ce cas une rupture adhésive qui rend plus aisée une éventuelle réutilisation ultérieure des substrats.

Le déclenchement du désassemblage se fait par un chauffage de la liaison, plus ou moins long et à plus ou moins haute température selon les adhésifs et les additifs utilisés.

Les essais ont été effectués en métallisant un premier des éléments composites à coller d'un premier côté de la liaison et en utilisant primaire démontable base DGEBA-DETA chargé avec de la pTSH (paraTolueneSulfonylHydraside), l'adhésif utilisé ensuite étant un adhésif connu sous la marque Hysol de la société HENKEL et la référence EA 9395.

Dans cette configuration, l'adhésif forme une barrière au niveau du second côté de la liaison ce qui évite de métalliser le second des éléments composites à coller.

Une autre solution consiste à utiliser un primaire démontable base DGEBA-Jeffamine chargé avec de l'ADA (Azodicarbonamide), l'adhésif utilisé ensuite étant là encore de l'Hysol EA 9395.

Dans les le premier cas où l'agent de démontabilité est la pTSH, une activation pour obtenir la démontabilité est par exemple de 1 à 10min à120°C.

Dans le second cas où l'agent de démontabilité est l'ADA, une activation de 1 à 10min à 200°C convient.

Dans tous les cas il reste possible, si les substrats le supportent, de réduire le temps d'activation en augmentant la température d'activation.

Selon un premier mode de réalisation de l'invention, on assure l'étanchéité d'un composite par l'emploi d'une fine couche métallique feuillard d'aluminium par exemple que l'on colle sur le composite préalablement au dépôt du primaire démontable ou de l'adhésif démontable sur le substrat ainsi revêtu. Il est d'ailleurs possible de coller le feuillard déjà revêtu du primaire démontable, ce qui permet de simplifier l'opération.

On obtient alors l'assemblage suivant : composite/adhésif de couplage/feuillard/primaire démontable/adhésif/composite.

Le primaire démontable peut notamment être un DGEBA-DETA chargé pTSH.

La tenue avant démontage est classique, de 15MPa avec rupture entre le composite et le feuillard.

Par contre, après commande du décollement d'une minute à 120 °C, la tenue résiduelle est seulement de 0.7MPa, conformément à ce qui était souhaité.

La rupture est par ailleurs une rupture adhésive entre le feuillard et le primaire chargé pTSH, cette solution est donc parfaitement conforme aux résultats attendus.

L'usage d'un feuillard pour étanchéifier l'interface avec le composite est donc compatible avec le collage structural c'est à dire:
- compatible avec une bonne adhésion sur les substrats,
- compatible avec les systèmes de collage démontable,
- donnant une tenue mécanique comprise entre 10 et 20 MPa.

D'autres matériaux que l'aluminium pourraient évidemment convenir, leur choix dépendant seulement de l'utilisation des ensembles collés, des systèmes de collage et des substrats considérés.

Par contre l'utilisation de feuillards est limitée par la forme géométrique des surfaces à assembler, qui doivent être développables, les feuillards en tant que matière première ayant une forme réglée au sens mathématique du terme.

Selon un second mode de réalisation de l'invention, on améliore la solution par revêtement métallique pour la rendre compatible avec les géométries complexes qu'on rencontre en pratique pour des pièces mécaniques.

Pour ce faire, on prévoit une métallisation par dépôt utilisable pour n'importe quelle géométrie, et remplissant les critères de bonne adhérence initiale, et bonne démontabilité.

On a donc testé différentes technologies de métallisations, que l'on décrit ci après.

Selon un premier mode de réalisation on procède à un dépôt métallique par galvanoplastie.

Des plaques de composite sont revêtues de Nickel sur une sous couche de Cuivre par un procédé de galvanoplastie classique, l'épaisseur totale du dépôt réalisé étant d'une centaine de microns.

Les éprouvettes ainsi traitées ont été assemblées par collage démontable avec un adhésif Hysol EA 9395, sur un primaire démontable à base de DGEBA-DETA chargé pTSH.

A l'état initial, la tenue mesurée a été de 8 MPa avec rupture à l'interface Nickel composite, tenue qui reste toutefois faible dans le cadre d'un collage structural.

Par contre, après commande à 120 °C, la tenue résiduelle était de 0.7MPA comme souhaité.

On constate donc que ce procédé de métallisation permet un collage démontable sur commande, mais on constate aussi que l'adhésion du revêtement est selon ce procédé insuffisante pour un collage structural de tenue élevée.

Selon un second mode de réalisation on procède à une métallisation par dépôt physique en phase vapeur, par exemple par pulvérisation cathodique.

La pulvérisation cathodique est un procédé type PVD (Physical Vapor Déposition selon la terminologie Anglo-saxonne) utilisant un plasma. Un gaz vecteur est introduit dans une chambre à pression réduite, les molécules de gaz s'ionisent et viennent percuter une plaque du métal à déposer appelée cible sous l'effet d'un champ électrique. Des particules de métal sont arrachées et viennent se déposer sur le substrat, une couche de métal vient donc se créer sur la surface du composite. Cette technique permet de déposer une couche très fine de métal sur le substrat.

Différents types de dépôts sont effectués suivant cette technologie : des dépôts d'Aluminium, de titane et d'un alliage Nickel Chrome de 1 à 10 Microns.

Dans tous les cas, on a obtenu avec le même système d'adhésif une tenue initiale comprise entre 12 et 18 MPa et une tenue après démontabilité commandée comprise entre 0.5 et 0.7 MPa.

Les travaux menés ont mis en évidence que le dépôt devait être très soigné en ce qui concerne la préparation du matériau composite avant métallisation.

Par exemple, il est connu qu'avant PVD il est possible de réaliser des décapages des substrats à l'aide d'atomes neutres ou réactifs.

Dans le cadre de la présente invention ces décapages permettent d'accroître la tenue de la liaison avant commande de décollement.

On a comparé des échantillons préparés sans décapages, avec des échantillons décapés d'une part avec des atomes d'argon, et d'autre par décapés avec un mélange d'atomes d'Argon et d'oxygène ; tous ces échantillons étant ensuite recouverts de 2 microns de Titane. Le tableau ci-dessous montre les tenues avant commande de décollement en fonction de la présence ou non et du type de décapage.

| Décapage | Rupture MPa |
|---|---|
| sans | 12 |
| Argon seul | 14 |
| Argon + 02 | 18 |

Selon un troisième mode de réalisation on a procédé à une métallisation par projection de flamme.

La projection à la flamme est une technique simple et peu coûteuse qui utilise la réaction chimique entre l'oxygène et un gaz carburant de combustion (acétylène, hydrogène) pour produire une source de chaleur. Cette source thermique crée la flamme. Le matériau d'apport se présente sous forme de poudre ou de film.

Dans le cas où le matériau d'apport est sous forme de fil, la seule fonction de la flamme est de fondre le matériau, ce dernier étant projeté par de l'air comprimé.

Dans le procédé de projection à la flamme avec poudre, les particules sont injectées dans la torche, puis fondues et projetées par la flamme.

Le principal avantage de cette technique est la grande variété des poudres utilisées offrant ainsi un large éventail de solutions.

Deux dépôts ont été réalisés : l'un d'aluminium, l'autre de nickel chrome, avec une épaisseur élevée.

Les résultats regroupés dans le tableau ci-dessous ont été obtenus toujours avec le même système de collage et des assemblages aluminium/composite.

| **Type de métallisation** | **Tenue en cisaillement, MPa** | **Démontabilité** |
|---|---|---|
| Aluminium | 13.5 ± 0.4 | Faible tenue résiduelle |
| | AF composite/métal | 80% AF métal/primaire |
| NiCr | 11.5 ± 1.9 | Faible tenue résiduelle |
| | AF composite/métal | 80% AF métal/primaire |

Dans ce tableau, l'abréviation AF veut dire rupture adhésive.

La tenue résiduelle obtenue avec ces essais est voisine de 1 MPa, alors que les échantillons testés étaient assez rugueux avec un Ra de l'ordre de 6 microns.

Avec cette technique, les tenues obtenues sont assez satisfaisantes, mais les faciès de rupture sont adhésifs à l'interface composite métal. Ces valeurs se rapprochent de la tenue d'assemblages structuraux, mais le critère de rupture cohésive n'est pas complètement acquis.

En ce qui concerne la démontabilité après activation, il existe une tenue résiduelle un peu élevée et les faciès de rupture sont en majorité adhésifs à l'interface métal/primaire et cohésifs dans le primaire.

La présente invention permet de faire fonctionner correctement le procédé de collage démontable sur commande sur des matériaux poreux en assurant une étanchéification superficielle efficace de ces matériaux par un revêtement.

La métallisation des zones de collage a en outre comme avantage que le revêtement métallique peut réaliser une zone conductrice de l'électricité sous le primaire démontable et constituer une piste conductrice résistive adaptée à commander la démontabilité de la liaison par le passage d'un courant électrique dans le revêtement métallique pour chauffer par effet Joule la zone de liaison.

Cette invention s'applique dans le cadre du désassemblage sur commande de structures composites de lanceurs spatiaux, mais bon nombre d'applications faisant appel à des pièces en composites assemblées par collage peuvent en bénéficier.

Dans le domaine de l'automobile, l'utilisation de matériaux composites, notamment pour les éléments de carrosserie, combinée à l'intérêt croissant pour l'assemblage par collage crée un terrain favorable pour l'exploitation de l'invention.

En outre, le secteur éolien, grand consommateur de composites et de colles structurales, peut également tirer profit de cette technologie pour faciliter les opérations de maintenance et de démantèlement des installations.

## Revendications

1. - Procédé de collage démontable d'au moins un substrat poreux avec un autre matériau au moyen d'au moins une couche d'adhésif démontable comportant un adjuvant de décollement adapté à générer des gaz qui, par expansion gazeuse ou par migration gazeuse vers au moins une des interfaces de la couche d'adhésif démontable sous l'action d'un chauffage de commande de démontage fragilisent une liaison adhésive, **caractérisé en ce qu'**on procède, préalablement au collage, à une application d'un revêtement métallique d'étanchéité sur ledit au moins un substrat.

2. - Procédé de collage démontable d'au moins un substrat poreux selon la revendication 1 pour lequel ladite couche d'adhésif démontable comporte une couche d'un primaire démontable et une couche d'adhésif.

3. - Procédé de collage démontable d'au moins un substrat poreux selon la revendication 1 ou 2 pour lequel on réalise le revêtement métallique au moyen d'un feuillard collé sur ledit au moins un substrat au moyen d'un adhésif de couplage composite/métal.

4. - Procédé de collage démontable d'au moins un substrat poreux selon la revendication 1 ou 2 pour lequel on réalise le revêtement métallique au moyen d'un feuillard collé sur ledit au moins un substrat par cofusion.

5. - Procédé de collage démontable d'au moins un substrat poreux selon la revendication 3 ou 4 pour lequel le feuillard est un feuillard d'aluminium.

6. - Procédé de collage démontable d'au moins un substrat poreux selon l'une des revendications 3 à 5 pour lequel le feuillard est revêtu de la couche d'adhésif démontable préalablement à son application sur ledit au moins un substrat.

7. - Procédé de collage démontable d'au moins un substrat poreux selon la revendication 1 ou 2 pour lequel on réalise le revêtement métallique par dépôt métallique.

8. - Procédé de collage démontable d'au moins un substrat poreux selon la revendications 7 pour lequel on réalise le dépôt métallique par galvanoplastie.

9. - Procédé de collage démontable d'au moins un substrat poreux selon la revendication 8 pour lequel on dépose une couche de cuivre sur le substrat.

10. - Procédé de collage démontable d'au moins un substrat poreux selon la revendication 9 pour lequel on termine le revêtement métallique par le dépôt d'une couche de nickel sur la couche de cuivre.

11. - Procédé de collage démontable d'au moins un substrat poreux selon la revendication 7 pour lequel on réalise le dépôt métallique par une technique de dépôt physique par phase vapeur d'un métal.

12. - Procédé de collage démontable d'au moins un substrat poreux selon la revendication 11 pour lequel le métal est choisi parmi l'aluminium, le titane et un alliage nickel chrome.

13. - Procédé de collage démontable d'au moins un substrat poreux selon la revendication 11 ou 12 pour lequel on réalise le revêtement métallique par le dépôt d'une couche de métal de 1 à 10 microns.

14. - Procédé de collage démontable d'au moins un substrat poreux selon la revendication 11 ou 12 pour lequel on réalise le revêtement métallique par le dépôt d'une couche de titane de 1 à 3 microns.

15. - Procédé de collage démontable d'au moins un substrat poreux selon la revendication 7 pour lequel on réalise le dépôt métallique par métallisation par projection de flamme.

16. - Procédé de collage démontable d'au moins un substrat poreux selon la revendication 15 pour lequel le métal est choisi parmi l'aluminium, le titane et un alliage nickel chrome.

17. - Procédé de collage démontable d'au moins un substrat poreux selon l'une quelconque des revendications 7 à 16 pour lequel on effectue préalablement au dépôt une opération de décapage du substrat.

18. - Procédé de collage démontable d'au moins un substrat poreux selon la revendication 17 pour lequel on réalise l'opération de décapage avec des atomes d'argon.

19. - Procédé de collage démontable d'au moins un substrat poreux selon la revendication 17 pour lequel on réalise l'opération de décapage avec un mélange d'atomes d'argon et d'oxygène.

20. - Procédé de collage démontable d'au moins un substrat poreux selon l'une quelconque des revendications 7 à 19 pour lequel on effectue un polissage de la surface du revêtement métallique après dépôt et avant application de l'adhésif démontable et collage en sorte de réduire la rugosité Ra du revêtement.

21. - Procédé de collage démontable d'au moins un substrat poreux selon l'une quelconque des revendications précédentes pour lequel on adapte au moins l'une des épaisseur du revêtement métallique et rugosité du revêtement métallique en sorte d'obtenir une tenue à la rupture entre 10 et 20 MPa avant commande de démontage et une tenue à la rupture inférieure à 1 MPa après commande de démontage, mesurée par un essai de traction-cisaillement selon la norme ISO 458.

22. - Assemblage démontable d'au moins un substrat poreux réalisé au moyen d'un procédé de collage démontable selon l'une quelconque des revendications précédentes pour lequel la tenue de l'assemblage avant commande de décollement est supérieure à 15MPa avec rupture cohésive entre le substrat et le revêtement et la tenue résiduelle après commande du décollement est inférieure à 0,8 MPa, mesurée par un essai de traction-cisaillement selon la norme ISO 458 .

23. - Assemblage démontable d'au moins un substrat poreux réalisé au moyen d'un procédé de collage démontable selon l'une quelconque des revendications 3 à 6 **caractérisé en ce que**, les substrats étant des substrats composites, il comporte en suivant: un premier substrat composite, un adhésif de couplage composite/métal, un revêtement métallique, une couche de primaire démontable, une couche d'adhésif et un second substrat.

24. - Assemblage démontable d'au moins un substrat poreux réalisé au moyen d'un procédé de collage démontable selon l'une quelconque des revendications 1 à 21 **caractérisé en ce que** le revêtement métallique réalise une zone conductrice de l'électricité sous le primaire démontable et constitue une piste conductrice résistive adaptées à commander la démontabilité de la liaison par le passage d'un courant électrique dans le revêtement métallique pour chauffer par effet Joule la zone de liaison.

## Patentansprüche

1. Verfahren zur lösbaren Verklebung mindestens eines porösen Substrats mit einem anderen Material mittels mindestens einer lösbaren Haftschicht, umfassend ein Ablösungsadjuvans, das geeignet ist, Gase zu erzeugen, die durch Gasexpansion oder durch Gasmigration zu mindestens einer der Grenzflächen der lösbaren Haftschicht unter der Einwirkung einer gesteuerten Lösungserwärmung eine Haftbindung schwächen, **dadurch gekennzeichnet, dass**, vor der Verklebung, ein metallischer Abdichtungsüberzug auf dem mindestens einen Substrat aufgebracht wird.

2. Verfahren zur lösbaren Verklebung mindestens eines porösen Substrats nach Anspruch 1, wobei die lösbare Haftschicht eine Schicht eines lösbaren Haftvermittlers und eine Haftschicht umfasst.

3. Verfahren zur lösbaren Verklebung mindestens eines porösen Substrats nach Anspruch 1 oder 2, wobei der metallische Überzug mittels eines Bands durchgeführt wird, das auf das mindestens eine Substrat mittels eines Haftmittels zur Kopplung von Verbundstoff/Metall geklebt wird.

4. Verfahren zur lösbaren Verklebung mindestens eines porösen Substrats nach Anspruch 1 oder 2, wobei der metallische Überzug mittels eines Bands durchgeführt wird, das auf das mindestens eine Substrat durch Verschmelzen geklebt wird.

5. Verfahren zur lösbaren Verklebung mindestens eines porösen Substrats nach Anspruch 3 oder 4, wobei das Band ein Aluminiumband ist.

6. Verfahren zur lösbaren Verklebung mindestens eines porösen Substrats nach einem der Ansprüche 3 bis 5, wobei das Band mit der lösbaren Haftschicht vor seinem Aufbringen auf das mindestens eine Substrat überzogen wird.

7. Verfahren zur lösbaren Verklebung mindestens eines porösen Substrats nach Anspruch 1 oder 2, wobei der metallische Überzug durch Metallabscheidung durchgeführt wird.

8. Verfahren zur lösbaren Verklebung mindestens eines porösen Substrats nach Anspruch 7, wobei die Metallabscheidung durch Galvanoplastik durchgeführt wird.

9. Verfahren zur lösbaren Verklebung mindestens eines porösen Substrats nach Anspruch 8, wobei eine Kupferschicht auf dem Substrat abgeschieden wird.

10. Verfahren zur lösbaren Verklebung mindestens eines porösen Substrats nach Anspruch 9, wobei der metallische Überzug durch die Abscheidung einer Nickelschicht auf der Kupferschicht beendet wird.

11. Verfahren zur lösbaren Verklebung mindestens eines porösen Substrats nach Anspruch 7, wobei die Metallabscheidung durch eine Technik der physikalischen Dampfabscheidung eines Metalls durchgeführt wird.

12. Verfahren zur lösbaren Verklebung mindestens eines porösen Substrats nach Anspruch 11, wobei das Metall aus Aluminium, Titan und einer NickelChrom-Legierung ausgewählt wird.

13. Verfahren zur lösbaren Verklebung mindestens eines porösen Substrats nach Anspruch 11 oder 12, wobei der metallische Überzug durch die Abscheidung einer 1 bis 10 Mikron Metallschicht durchgeführt wird.

14. Verfahren zur lösbaren Verklebung mindestens eines porösen Substrats nach Anspruch 11 oder 12, wobei der metallische Überzug durch die Abscheidung einer 1 bis 3 Mikron Titanschicht durchgeführt wird.

15. Verfahren zur lösbaren Verklebung mindestens eines porösen Substrats nach Anspruch 7, wobei die Metallabscheidung durch Flammspritzmetallisierung durchgeführt wird.

16. Verfahren zur lösbaren Verklebung mindestens eines porösen Substrats nach Anspruch 15, wobei das Metall aus Aluminium, Titan und einer NickelChrom-Legierung ausgewählt wird.

17. Verfahren zur lösbaren Verklebung mindestens eines porösen Substrats nach einem der Ansprüche 7 bis 16, wobei vor der Abscheidung ein Dekapierungsvorgang des Substrats vorgenommen wird.

18. Verfahren zur lösbaren Verklebung mindestens eines porösen Substrats nach Anspruch 17, wobei der Dekapierungsvorgang mit Argonatomen durchgeführt wird.

19. Verfahren zur lösbaren Verklebung mindestens eines porösen Substrats nach Anspruch 17, wobei der Dekapierungsvorgang mit einem Gemisch von Argon- und Sauerstoffatomen vorgenommen wird.

20. Verfahren zur lösbaren Verklebung mindestens eines porösen Substrats nach einem der Ansprüche 7 bis 19, wobei ein Polieren der Oberfläche des metallischen Überzugs nach der Abscheidung und vor dem Aufbringen des lösbaren Haftmittels und der Verklebung derart vorgenommen wird, dass die Rauheit Ra des Überzugs reduziert wird.

21. Verfahren zur lösbaren Verklebung mindestens eines porösen Substrats nach einem der vorhergehenden Ansprüche, wobei die Dicke des metallischen Überzugs und/oder die Rauheit des metallischen Überzugs derart angepasst wird, dass eine Zugfestigkeit zwischen 10 und 20 MPa vor der gesteuerten Lösung und eine Zugfestigkeit von weniger als 1 MPa nach der gesteuerten Lösung erhalten werden, gemessen durch einen Zugscherfestigkeitsversuch gemäß der Norm ISO 4587.

22. Lösbare Anordnung mindestens eines porösen Substrats, welche mittels eines Verfahrens zur lösbaren Verklebung nach einem der vorhergehenden Ansprüche hergestellt wird, wobei die Festigkeit der Anordnung vor der gesteuerten Ablösung mehr als 15 MPa beträgt, wobei der kohäsive Bruch zwischen dem Substrat und dem Überzug und die Restfestigkeit nach der gesteuerten Ablösung weniger als 0,8 MPa beträgt, gemessen durch einen Zugscherfestigkeitsversuch gemäß der Norm ISO 4587.

23. Lösbare Anordnung mindestens eines porösen Substrats, welche mittels eines Verfahrens zur lösbaren Verklebung nach einem der Ansprüche 3 bis 6 hergestellt wird, **dadurch gekennzeichnet, dass** diese, da die Substrate Verbundstoffsubstrate sind, aufeinanderfolgend umfasst: ein erstes Verbundstoffsubstrat, ein Haftmittel zur Kopplung von Verbundstoff/Metall, einen metallischen Überzug, eine lösbare Haftvermittlerschicht, eine Haftschicht und ein zweites Substrat.

24. Lösbare Anordnung mindestens eines porösen Substrats, welche mittels eines Verfahrens zur lösbaren Verklebung nach einem der Ansprüche 1 bis 21 hergestellt wird, **dadurch gekennzeichnet, dass** der metallische Überzug eine Zone zur Leitung von Elektrizität unter dem lösbaren Haftvermittler bildet und eine resistive Leiterbahn darstellt, die geeignet sind, die Lösbarkeit der Bindung durch das Führen eines elektrischen Stroms in den metallischen Überzug zu steuern, um durch den Joule-Effekt die Bindungszone zu erwärmen.

## Claims

1. Method for detachable gluing of at least one porous substrate with another material by means of at least one layer of detachable adhesive that contains an ungluing additive able to generate gases that disrupt an adhesive bond by gaseous expansion or by gaseous migration to at least one of the interfaces of the layer of detachable adhesive under the action of heat for detachment action, **characterized in that** a metallic seal lining is applied to the said at least one substrate prior to the gluing.

2. Method for detachable gluing of at least one porous substrate according to Claim 1 for which said layer of detachable adhesive contains a layer of a detachable primer and a layer of adhesive.

3. Method for detachable gluing of at least one porous substrate according to Claim 1 or 2 for which the metallic lining is produced by means of a metal strip glued to the said at least one substrate by means of a composite/metal coupling adhesive.

4. Method for detachable gluing of at least one porous substrate according to Claim 1 or 2 for which the metallic lining is produced by means of a metal strip glued to the said at least one substrate by fusing them together.

5. Method for detachable gluing of at least one porous substrate according to Claim 3 or 4 for which the metal strip is an aluminum strip.

6. Method for detachable gluing of at least one porous substrate according to one of Claims 3 to 5 for which the metal strip is coated with the layer of detachable adhesive prior to its application to the said at least one substrate.

7. Method for detachable gluing of at least one porous substrate according to Claim 1 or 2 for which the metallic lining is produced by metal deposition.

8. Method for detachable gluing of at least one porous substrate according to Claim 7 for which the metal deposition is performed by electroplating.

9. Method for detachable gluing of at least one porous substrate according to Claim 8 for which a layer of copper is deposited on the substrate.

10. Method for detachable gluing of at least one porous substrate according to Claim 9 for which the metal lining is completed by depositing a layer of nickel on the layer of copper.

11. Method for detachable gluing of at least one porous substrate according to Claim 7 for which the metal deposition is performed by a technique of physical vapour deposition of a metal.

12. Method for detachable gluing of at least one porous substrate according to Claim 11 for which the metal is chosen from aluminium, titanium, and a nickel/chromium alloy.

13. Method for detachable gluing of at least one porous substrate according to Claim 11 or 12 for which the metal lining is produced by the deposition of a layer of metal from of 1 to 10 microns.

14. Method for detachable gluing of at least one porous substrate according to Claim 11 or 12 for which the metal lining is produced by the deposition of a layer of titanium of from 1 to 3 microns.

15. Method for detachable gluing of at least one porous substrate according to Claim 7 for which the metal deposition is performed by flame spray metallization.

16. Method for detachable gluing of at least one porous substrate according to Claim 15 for which the metal is chosen from aluminium, titanium, and a nickel/chromium alloy.

17. Method for detachable gluing of at least one porous substrate according to any one of Claims 7 to 16 for which the substrate is stripped prior to the deposition.

18. Method for detachable gluing of at least one porous substrate according to Claim 17 for which the stripping is done with argon atoms.

19. Method for detachable gluing of at least one porous substrate according to Claim 17 for which the stripping is done with a mixture of argon and oxygen atoms.

20. Method for detachable gluing of at least one porous substrate according to any one of Claims 7 to 19 for which the surface of the metallic lining is polished after deposition and before application of the detachable adhesive and gluing so as to reduce the roughness Ra of the lining.

21. Method for detachable gluing of at least one porous substrate according to any one of the preceding claims for which at least either the thickness of the metallic lining or roughness of the metallic lining is adapted to obtain a breaking strength between 10 and 20 MPa before the detachment action and a breaking strength of less than 1 MPa after the detachment action, measured by a tensile lap-shear text according to the ISO 4587 standard.

22. Detachable assembly of at least one porous substrate made by means of a detachable gluing procedure according to any one of the preceding claims for which the strength of the assembly before the detachment action is greater than 15 MPa with cohesive failure between the substrate and the lining, and the residual strength after the detachment action is below 0.8 Mpa, measured by a tensile lap-shear text according to the ISO 4587 standard.

23. Detachable assembly of at least one porous substrate made by means of a detachable gluing procedure according to any one of Claims 3 to 6, **characterized in that**, with the substrates being composite substrates, it contains the following: a first composite substrate, a composite/metal coupling adhesive, a metallic lining, a layer of detachable primer, a layer of adhesive, and a second substrate.

24. Detachable assembly of at least one porous substrate made by means of a detachable gluing procedure according to any one of Claims 1 to 21, **characterized in that** the metallic lining makes an electrically conductive zone beneath the detachable primer and constitutes a conductive resistive pathway which are able to control the detachability of the bond by the passage of an electric current in the metallic lining to heat the bonding zone by a Joule effect.
